# EUROPÄISCHE PATENTANMELDUNG

(11) **EP 1 233 229 A2**
(43) Veröffentlichungstag der Anmeldung: **21.08.2002**
(21) Anmeldenummer: 02001766.1
(22) Anmeldetag: 25.01.2002
(51) Int. Cl.: F16L 55/28, B08B 9/04, F16L 55/48

(54) **Vorrichtung und Verfahren zum Durchfahren gerader und gekrümmter Rohre**

(30) Priorität: 13.02.2001 DE 10106614
(71) Anmelder: ARCHINGER AG, 90461 Nürnberg (DE)
(72) Erfinder: Archinger, Peter, 90455 Nürnberg (DE)
(74) Vertreter: KOHLER SCHMID + PARTNER

(57) **Zusammenfassung**

Bei einer Vorrichtung (1) zum zentrierten Durchfahren von geraden und gekrümmten Rohren (2) mit einem bezüglich seiner Längsachse (3) rotationssymmetrischen hantelförmigen Grundkörper (4), dessen zwei miteinander verbundene Hantelkörper (5, 6) jeweils, im Längsquerschnitt gesehen, nach außen gekrümmte Außenoberflächen (7) zur Anlage an eine Rohrinnenwand (8) aufweisen, sind innerhalb des hantelförmigen Grundkörpers (4) eine Prüfeinrichtung (10) und/oder eine Beareitungseinrichtung vorgesehen, deren Prüfköpfe bzw. Bearbeitungsköpfe zwischen den beiden Hantelkörpern (5, 6) ringsum am Umfang des Grundkörpers (4) angeordnet sind, und sind die nach außen gekrümmten Außenoberflächen (7) beider Hantelkörper (5, 6) jeweils mit einem elastisch verformbaren Gleitkissen (12) versehen.

## Beschreibung

Die Erfindung betrifft eine Vorrichtung zum zentrierten Durchfahren von geraden und gekrümmten Rohren, mit einem bezüglich seiner Längsachse rotationssymmetrischen hantelförmigen Grundkörper, dessen zwei miteinander verbundene Hantelkörper jeweils, im Längsquerschnitt gesehen, nach außen gekrümmte Außenoberflächen zur Anlage an eine Rohrinnenwand aufweisen, sowie ein Verfahren zum Überprüfen und/oder Bearbeiten der Rohrinnenseite eines geraden oder gekrümmten Rohres mittels einer solchen in das Rohr eingebrachte Vorrichtung.

Eine derartige Vorrichtung ist beispielsweise durch die DE 94 07 228 U1 bekannt geworden.

Zum Durchfahren und Warten von Rohrleitungen werden als Molche bezeichnete Vorrichtungen eingesetzt, die sich selbsttätig durch die Rohrleitung bewegen. Dazu werden die Vorrichtungen entweder durch eigene motorbetriebene Antriebselemente oder aber ohne eigenen Antrieb durch eine Flüssigkeit durch das Rohr bewegt. Gerade solche antriebslosen Vorrichtungen sind bisher sehr störanfällig, da einerseits der zwischen Vorrichtung und Rohrwand verbleibende Spalt für einen wirkungsvollen Vortrieb der Vorrichtung möglichst gering sein soll und andererseits ein Verkanten der Vorrichtung innerhalb des Rohres unbedingt vermieden werden muß.

Aus der DE 94 07 228 U1 ist ein Molch zur Reinigung der Rohrleitung bekannt. Um dabei sowohl in geraden als auch in gekrümmten Rohrleitungsabschnitten eine Abdichtung des Molches gegen die Rohrinnenwand sicherzustellen, bestehen die beiden Hantelkörper vollständig (d.h. massiv) aus einem elastomeren Werkstoff, so daß die Außenoberfläche die Rohrinnenwand flächig abdichtet. Der bekannte Molch dient lediglich zur Reinigung der Rohrleitung und enthält einen Permanentmagneten, um die Lage des Molches in der Rohrleitung von außen mittels eines Magnetfeldsensors erkennen zu können.

Weiterhin ist aus der DE 197 33 531 A1 ein Molch bekannt, der ebenfalls zum Reinigen der Rohrleitung dient und dessen nach außen gekrümmte Außenoberflächen Anlageflächen in Form von elastisch nachgebenden Ringlippen aufweisen. Durch diese Ringlippen ist der Molch in der Rohrleitung zentriert und abgedichtet. In diesem bekannten Molch ist ebenfalls ein Permanentmagnet zur Lokalisierung des Molches innerhalb der Rohrleitung vorgesehen.

Es ist daher die Aufgabe der Erfindung, eine Vorrichtung der eingangs genannten Art dahingehend weiterzubilden, daß mit der Vorrichtung die durchfahrene Rohrleitung geprüft und/oder bearbeitet werden kann.

Diese Aufgabe wird erfindungsgemäß dadurch gelöst, daß innerhalb des hantelförmigen Grundkörpers eine Prüfeinrichtung und/oder eine Bearbeitungseinrichtung vorgesehen sind, deren Prüfköpfe bzw. Bearbeitungsköpfe zwischen den beiden Hantelkörpern ringsum am Umfang des Grundkörpers angeordnet sind, und daß die nach außen gekrümmten Außenoberflächen beider Hantelkörper jeweils mit einem elastisch verformbaren Gleitkissen versehen sind.

Die erfindungsgemäße Vorrichtung dient der optischen und/oder meßtechnischen Untersuchung und/oder der Bearbeitung von Rohrleitungssystemen, z.B. mittels Ultraschall, Wirbelstrom, Kamerasystem, Laser, artverwandte Techniken oder Kombinationen davon. Dazu sind am oder innerhalb des hantelförmigen Grundkörpers eine Prüfeinrichtung und/oder eine Bearbeitungseinrichtung und/oder Lokalisierungseinrichtung und/oder eine Versorgungseinrichtung und/oder eine Datenverarbeitungseinrichtung vorgesehen. Mit der Prüfeinrichtung kann eine Rohrleitung auf Fehlstellen (Korrosion, Erosion) z.B. durch Wanddickenmessung geprüft werden. Dazu sind entsprechende Prüfköpfe im oder am Grundkörper angeordnet, wobei eine flächendeckende Prüfung der Rohrwand durch entsprechende Bestückung in Umfangsrichtung erzielt wird. Die Prüfköpfe werden über eine geeignete Elektronik gesteuert, die entweder im gleichen oder in einem anderen Grundkörper untergebracht ist. Bei Ultraschallmessungen wird der Ultraschall radial nach außen gesendet, und zwar entweder rechtwinklig zur Rohrwandung bei Wandstärkemessungen (Korrosion, Erosion) oder unter Winkel bei Rißprüfungen.

Durch die elastisch verformbaren Gleitkissen wird die Reibung der Vorrichtung im Rohr minimiert und die Vorrichtung im Rohr zentriert. Das flächig verformbare Gleitkissen kann Rohrquerschnittsänderungen, z.B. aufgrund von Fertigungstoleranzen oder Stellgliedern, dynamisch ausgleichen. Weiterhin ermöglicht das Gleitkissen (z.B. ein Gelkissen) eine dynamische Abdichtung der Vorrichtung gegen die Rohrwand über den gesamten Rohrumfang und so einen mediumunterstützten Vortrieb der Vorrichtung. D.h., die Vorrichtung läßt sich mittels eines Mediums durch die Rohrleitung bewegen, wobei als Vortriebsmedium die Flüssigkeit verwendet werden kann, die auch im Betriebszustand in der Anlage transportiert wird.

Vorzugsweise sind ein oder beide Hantelkörper kugelförmig oder kugelsegmentförmig ausgebildet.

Aufgrund der gekrümmten Außenoberfläche der beiden Hantelkörper liegt der Grundkörper an der Rohrinnenwand auch bei gekrümmten Rohrabschnitten stets verkantungsfrei an. Der Querdurchmesser der Hantelkörper ist auf den Innendurchmesser des zu durchfahrenden Rohres möglichst spaltfrei abgestimmt, so daß einerseits der Grundkörper im Rohr zentriert ist und andererseits die Vorrichtung mittels einer anströmenden Flüssigkeit durch das Rohr vorangetrieben wird.

In einer vorteilhaften Ausführungsform ist der Grundkörper in sich geschlossen und damit undurchlässig gegenüber dem jeweiligen sich in dem zu durchfahrenden Rohr befindlichen Medium.

Eine Messung des im Rohr zurückgelegten Wegs der Vorrichtung (z.B. mittels Laufrad) dient der exakten Lokalisierung der aufgenommenen Meßdaten in Längsrichtung im Rohrstrang. Eine Messung der jeweiligen Drehlage der Vorrichtung (z.B. mittels Kreiselkompaß) ermöglicht Längenkorrekturen aufgrund der Verdrehung der Vorrichtung und dient der exakten Lokalisierung der aufgenommenen Meßdaten in Umfangsrichtung im Rohrstrang. Die anfallenden Meßdaten werden in einer Datenspeichereinheit gespeichert und dann nach erfolgter Meßfahrt außerhalb des Rohres ausgewertet. Zur Energieversorgung der Prüfeinrichtung und der Datenspeichereinheiten dient eine z.B. mit Akkus bestückte Versorgungseinheit.

In einer Weiterbildung dieser Ausführungsform ist das Gleitkissen eines der beiden Hantelkörper mit in Längsrichtung verlaufenden Durchgangsöffnungen oder -schlitzen versehen, so daß die durch die beiden Hantelkörper und die Rohrwand definierte ringförmige Kammer mit Medium gefüllt wird. Dieses in der Kammer befindliche Medium wird als Ankopplungsmedium für Ultraschallmessungen verwendet.

Bei bevorzugten Ausführungsformen der Erfindung sind mehrere Grundkörper jeweils über ein Kupplungselement gelenkig und drehsteif miteinander verbunden, welches gleichzeitig als Kabeldurchführung zwischen den Grundkörpern dient. Das Kupplungselement ermöglicht eine Relativauslenkung der beiden miteinander verbundenen Grundkörpern, so daß gekrümmte Rohre auch mit mehreren verbundenen Grundkörpern durchfahren werden können. Das Kupplungselement ist beispielsweise als starres Verbindungsrohr oder als Schraubenfeder ausgeführt, wobei sich Zug- und Schubkräfte durch das Kupplungselement übertragen lassen.

Mehrere miteinander verbundene Grundkörper ermöglichen einen modularen Aufbau der Vorrichtung mit z.B. Wartung-/Inspektionsmodul, Datenmodul und Versorgungsmodul. Je nach Rohrquerschnitt können einzelne Module in einem einzigen Modul zusammengefaßt und je nach Einsatzfall auch verschiedene Module miteinander kombiniert werden (z.B. zusätzliches Kameramodul).

Um die Vorrichtung mittels eines Schubmediums im Rohr voranzutreiben, sind die nach außen gekrümmten Außenoberflächen des in Vortriebsrichtung der Vorrichtung hintersten Grundkörpers mit einem elastisch verformbaren Gleitkissen versehen. Obwohl ein Gleit- bzw. Dichtkissen an nur einem Hantelkörper für den Vortrieb bereits ausreichen würde, hat die Ausführung mit Dichtkissen an beiden Hantelkörpern den wesentlichen Vorteil, daß der hinterste Grundkörper vorne und hinten zentriert ist. Das Gleitkissen ist am hintersten Grundkörper vorgesehen, da dort der herrschende Flüssigkeitsdruck am größten ist.

Vorzugsweise ist das Gleitkissen des hinteren Hantelkörpers des in Vortriebsrichtung der Vorrichtung hintersten Grundkörpers mit in Längsrichtung verlaufenden Durchgangsöffnungen oder -schlitzen versehen. Dadurch ist sichergestellt, daß die durch die beiden Hantelkörper und die Rohrwand definierte ringförmige Kammer mit der anströmenden Flüssigkeit (Schubmedium) als Ankopplungsmedium für Ultraschallmessungen gefüllt wird.

Die Erfindung betrifft auch das Verfahren, die Rohrinnenseite eines geraden oder gekrümmten Rohres mittels einer in das Rohr eingebrachten Vorrichtung, wie sie oben beschrieben ist, zu überprüfen und/oder zu bearbeiten. Dabei wird die Vorrichtung vorzugsweise mittels Flüssigkeit durch das Rohr geschoben.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebene Ausführungsformen sind nicht als abschließende Aufzählung zu verstehen, sondern haben vielmehr beispielhaften Charakter für die Schilderung der Erfindung.

Es zeigt:
- Fig. 1: eine erfindungsgemäße Vorrichtung mit einem einzigen Grundkörper in einem geraden Rohrabschnitt;
- Fig. 2: einen Querschnitt durch die Vorrichtung gemäß II-II in Fig. 1; und
- Fig. 3: eine erfindungsgemäße Vorrichtung mit drei Grundkörpern in einem gekrümmten Rohrabschnitt.

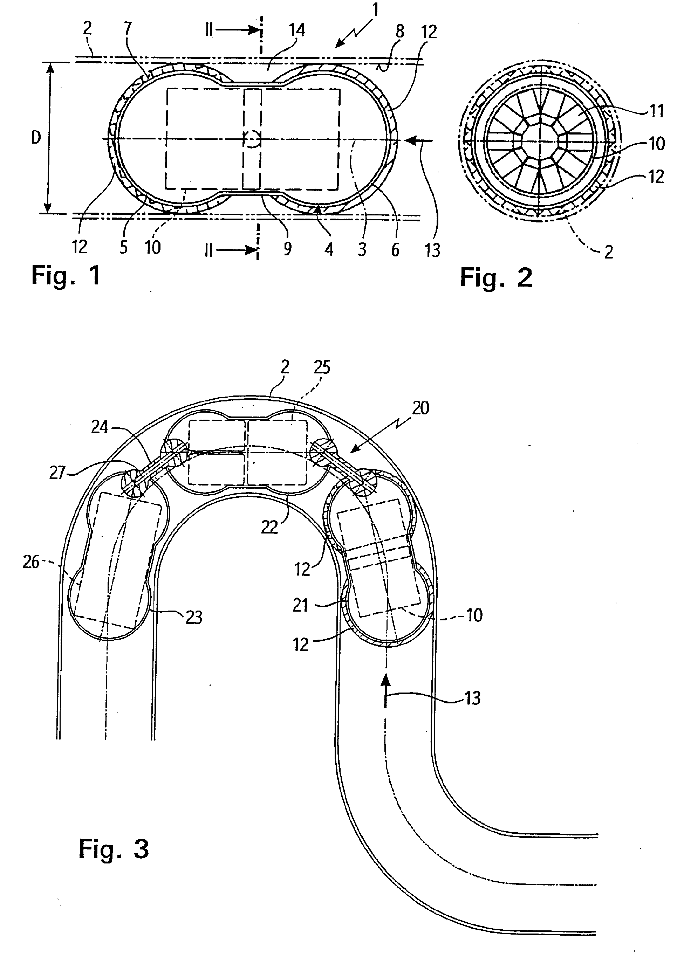

Die in **Fig. 1** insgesamt mit **1** bezeichnete Vorrichtung dient der optischen und/oder meßtechnischen Untersuchung und/oder der Bearbeitung eines Rohres **2** mittels Ultraschall, Wirbelstrom, Kamerasystem, Laser und artverwandten Techniken sowie Kombinationen davon.

Die Vorrichtung 1 umfaßt einen bezüglich seiner Längsachse **3** rotationssymmetrischen hantelförmigen hohlen Grundkörper **4**, dessen zwei miteinander verbundene kugelförmige Hantelkörper **5**, **6** jeweils nach außen gekrümmte Außenoberflächen **7** zur Anlage an die Rohrinnenwand **8** aufweisen. Durch einen Verbindungssteg **9** sind die beiden Hantelkörper 5, 6 miteinander starr verbunden. Im Innern des Grundkörpers 4 ist eine Prüfeinrichtung **10** zur optischen und/oder meßtechnischen Untersuchung der Rohrinnenwand 8 vorgesehen. Wie die Schnittansicht in **Fig. 2** zeigt, weist die Prüfeinrichtung 10 zur flächendeckenden Untersuchung des Rohres 2 mehrere Prüfköpfe **11** auf, die in Umfangsrichtung des Grundkörpers 4 gleichmäßig verteilt angeordnet sind.

Die nach außen gekrümmten Außenoberflächen 7 beider Hantelkörper 5, 6 sind jeweils mit einem elastisch verformbaren Dicht- bzw. Gleitkissen **12** (z.B. Gelkissen) versehen, um die Reibung der Vorrichtung 1 im Rohr 2 zu minimieren, die Vorrichtung 1 im Rohr 2 zu zentrieren und Änderungen des Rohrquerschnitts aufgrund der flächigen Verformbarkeit dynamisch auszugleichen. Durch dieses elastisch verformbare Gleitkissen 12 wird die Vorrichtung 1 außerdem bezüglich einer im Rohr 2 in Pfeilrichtung **13** anströmenden Flüssigkeit über den gesamten Rohrumfang gegen die Rohrwand 2 abgedichtet, wodurch die Vorrichtung 1, von der Flüssigkeit angeschoben, in Pfeilrichtung 13 durch das Rohr 2 voranbewegt wird.

Im Gleitkissen 12 des in Pfeilrichtung 13 hinteren Hantelkörpers 6 sind in Längsrichtung verlaufende Durchgangsöffnungen oder -schlitze (nicht dargestellt) vorgesehen, so daß die durch die beiden Hantelkörper 5, 6 und die Rohrinnenwand 8 definierte ringförmige Kammer **14** mit der anströmenden Flüssigkeit gefüllt wird. Die in der Kammer 14 befindliche Flüssigkeit wird im Fall von Ultraschallmessungen als Ankopplungsmedium verwendet.

Im gezeigten Ausführungsbeispiel entspricht der durch die Gleitkissen 12 definierte Außendurchmesser der Vorrichtung 1 dem Rohrinnendurchmesser **D**, wobei die Wandstärke des Gleitkissens 12 ca. 0,04*D beträgt. Der Abstand der Mittelpunkte der beiden kugelförmigen Hantelkörper 5, 6 beträgt ca. 0,9*D und der Außendurchmesser des Verbindungsstegs ca. 0,75*D. Der minimale Biegeradius, der mit dieser Vorrichtung 1 durchfahren werden kann, beträgt 1,5*D.

Die in **Fig. 3** gezeigte Vorrichtung **20** umfaßt drei hintereinander angeordnete Grundkörper **21, 22, 23**, von denen der in Anströmrichtung 13 der Flüssigkeit hinterste Grundkörper 21 wie die in Fig. 1 gezeigte Vorrichtung 1, d.h. mit Gleitkissen 12 und Prüfeinrichtung 10, ausgebildet ist. Zwei benachbarte Grundkörper sind jeweils über ein als starres Verbindungsrohr ausgebildetes Kupplungselement **24** gelenkig, aber verdrehsteif miteinander verbunden. Die mit Kugelgelenk in den Grundkörpern drehbar gelagerten Kupplungselemente 24 ermöglichen ein Durchfahren von Rohren mit einem minimalen Biegeradius von 1,5*D. Bei den beiden in Anströmrichtung 13 vorderen Grundkörpern 22, 23 sind keine Gleitkissen vorhanden, gleichwohl ist ihre Außenoberfläche möglichst reibungsarm ausgebildet.

Im Innern dieser beiden vorderen Grundkörper 23, 24 sind eine Versorgungseinheit **25** und eine Datenverarbeitungseinrichtung **26** vorgesehen. Die einzelnen Grundkörper sind miteinander über Kabel verbunden, die durch Kabeldurchführungen **27** in den Kupplungselementen 24 geführt sind. Anfallende Datenmengen werden in der Datenverarbeitungseinrichtung 26 gespeichert, wobei zu den Meßdaten Ultraschall-Meßdaten, Wegstrecken- und Drehlagedaten der Vorrichtung 20 zählen. Die Auswertung der Meßdaten erfolgt dann nach erfolgter Meßfahrt außerhalb des Rohres 2. Die Versorgungseinrichtung 25 ist mit Akkus bestückt und dient der Energieversorgung der Prüfeinrichtung 10 und der Datenverarbeitungseinrichtung 26.

Bei einem Festfahren der Vorrichtung 1, 20 kann durch Umkehrung der Strömungsrichtung der Flüssigkeit die Förderrichtung der Vorrichtung 1 gedreht werden. Die Geschwindigkeit der Vorrichtung ist abhängig vom Flüssigkeitsdruck, der bei 3"-Leitungen bei ca. 7 bis 10,5 bar liegt.

## Patentansprüche

1. Vorrichtung (1; 20) zum zentrierten Durchfahren von geraden und gekrümmten Rohren (2), mit einem bezüglich seiner Längsachse (3) rotationssymmetrischen hantelförmigen Grundkörper (4; 21, 22, 23), dessen zwei miteinander verbundene Hantelkörper (5, 6) jeweils, im Längsquerschnitt gesehen, nach außen gekrümmte Außenoberflächen (7) zur Anlage an eine Rohrinnenwand (8) aufweisen,
**dadurch gekennzeichnet,**
**daß** innerhalb des hantelförmigen Grundkörpers (4; 21, 22, 23) eine Prüfeinrichtung (10) und/oder eine Bearbeitungseinrichtung vorgesehen sind, deren Prüfköpfe (11) bzw. Bearbeitungsköpfe zwischen den beiden Hantelkörpern (5, 6) ringsum am Umfang des Grundkörpers (4) angeordnet sind, und daß die nach außen gekrümmten Außenoberflächen (7) beider Hantelkörper (5, 6) jeweils mit einem elastisch verformbaren Gleitkissen (12) versehen sind.

2. Vorrichtung nach Anspruch 1, **dadurch gekennzeichnet, daß** der Grundkörper (4; 21, 22, 23) in sich geschlossen ist.

3. Vorrichtung nach Anspruch 1 oder 2, **dadurch gekennzeichnet, daß** ein oder beide Hantelkörper (5, 6) kugelförmig oder kugelsegmentförmig ausgebildet sind.

4. Vorrichtung nach einem der vorhergehenden Ansprüche,
**dadurch gekennzeichnet, daß** innerhalb des hantelförmigen Grundkörpers (4; 21, 22, 23) eine Lokalisierungseinrichtung und/oder eine Versorgungseinrichtung (25) und/oder eine Datenverarbeitungseinrichtung (26) vorgesehen sind.

5. Vorrichtung nach einem der vorhergehenden Ansprüche,
**dadurch gekennzeichnet, daß** das Gleitkissen (12) eines der beiden Hantelkörper (5, 6) mit in Längsrichtung verlaufenden Durchgangsöffnungen oder -schlitzen versehen ist.

6. Vorrichtung nach einem der vorhergehenden Ansprüche,
**dadurch gekennzeichnet, daß** mehrere Grundkörper (21, 22, 23) jeweils über Kupplungselemente (24) gelenkig miteinander verbunden sind.

7. Vorrichtung nach Anspruch 6, **dadurch gekennzeichnet, daß** zwei benachbarte Grundkörper (21, 22; 22, 23) durch das Kupplungselement (24) miteinander drehsteif verbunden sind.

8. Vorrichtung nach Anspruch 6 oder 7, **dadurch gekennzeichnet, daß** die Kupplungselemente (24) mit Kabeldurchführungen (27) versehen sind.

9. Vorrichtung nach einem der Ansprüche 6 bis 8, **dadurch gekennzeichnet, daß** nur die nach außen gekrümmte Außenoberfläche (7) des in Vortriebsrichtung (13) der Vorrichtung (20) hintersten Grundkörpers (21) mit einem elastisch verformbaren Gleitkissen (12) versehen sind.

10. Vorrichtung nach Anspruch 9, **dadurch gekennzeichnet, daß** das Gleitkissen (12) des hinteren Hantelkörpers des in Vortriebsrichtung (13) der Vorrichtung (20) hintersten Grundkörpers (21) mit in Längsrichtung verlaufenden Durchgangsöffnungen oder -schlitzen versehen ist.

11. Verfahren zum Überprüfen und/oder Bearbeiten der Rohrinnenseite eines geraden oder gekrümmten Rohres (2) mittels einer in das Rohr (2) eingebrachten Vorrichtung (1; 20) gemäß einem der vorhergehenden Ansprüche.

12. Verfahren nach Anspruch 11, **dadurch gekennzeichnet, daß** die Vorrichtung (1; 20) mittels Flüssigkeit durch das Rohr (2) geschoben wird.
